# FASCICULE DE BREVET EUROPEEN

(11) **EP 2 689 175 B1**
(45) Date de publication et mention de la délivrance du brevet: **24.06.2015**
(21) Numéro de dépôt: 12709657.6
(22) Date de dépôt: 22.03.2012
(51) Int. Cl.: F16L 33/01, F16L 33/34, F16L 33/207

(54) **ASSEMBLAGE D'UN EMBOUT DE CONNEXION ET D'UNE CONDUITE TUBULAIRE FLEXIBLE POUR LE TRANSPORT D'UN FLUIDE EN MILIEU MARIN ET PROCÉDÉ DE MONTAGE DUDIT EMBOUT DE CONNEXION**
MONTAGE EINER VERBINDUNGSENDSTÜCK UND EIN FLEXIBLE ROHRLEITUNG ZUM TRANSPORTIEREN EINER FLÜSSIGKEIT IM MEER UND VERFAHREN ZUM MONTIEREN EINES SOLCHEN VERBINDUNGSENDSTÜCKS
ASSEMBLY OF A CONNECTION END FITTING AND A FLEXIBLE TUBULAR PIPE FOR CARRYING A FLUID IN A MARINE ENVIRONMENT AND METHOD FOR FITTING SAID CONNECTION END FITTING

(30) Priorité: 24.03.2011 FR 1152435
(43) Date de publication de la demande: 29.01.2014
(73) Titulaire: Technip France, 92400 Courbevoix (FR)
(72) Inventeur: TOSTE, Fernando Leitao Gonçalves, CEP-20540-140 Rio de Janeiro (BR); LAAF, Fred, CEP- 4220-001 Rio de Janeiro (BR); AQUINO, Roberto, CEP-20530-560 Rio de Janeiro (BR); BRUNO, German Raul, F-76000 Rouen (FR)
(74) Mandataire: Blot, Philippe Robert Emile
(86) Numéro de dépôt international: PCT/EP2012/055118
(87) Numéro de publication internationale: WO 2012/126999

(56) Documents cités:
- EP-A2- 2 492 571
- WO-A1-2011/026801
- FR-A1- 2 561 745
- FR-A1- 2 816 389
- US-A- 3 936 118

## Description

La présente invention concerne un embout de connexion d'une conduite tubulaire flexible pour le transport d'un fluide en milieu marin. Elle concerne plus particulièrement une conduite flexible de type non-lié («unbonded » en anglais) utilisée pour l'exploitation off-shore de gisements pétroliers et gaziers.

L'invention concernant également un procédé de montage sur une extrémité d'une conduite tubulaire flexible de type non-lié d'un tel embout de connexion.

Ces conduites flexibles, qui sont formées d'un ensemble de différentes couches concentriques et superposées, sont dites de type non-lié dès lors que ces couches présentent une certaine liberté de se déplacer les unes par rapport aux autres.

Ces conduites flexibles satisfont, entre autres, aux recommandations des documents normatifs API 17J « Spécification for Unbonded Flexible Pipe » et API RP 17B « Recommended Practice for Flexible Pipe » établis par l'Américain Petroleum Institute.

D'une manière générale, les couches constitutives comprennent notamment des gaines notamment en matériau polymère assurant généralement une fonction d'étanchéité, et des couches de renfort destinées à la reprise des efforts mécaniques et formées par des enroulements de feuillards, de fils métalliques, de bandes diverses ou de profilés en matériaux composites.

Les conduites flexibles de type non-lié les plus utilisées pour l'exploitation off-shore de gisements pétroliers et gaziers comprennent généralement, de l'intérieur vers l'extérieur, une carcasse interne constituée d'un feuillard agrafé qui sert à empêcher l'écrasement de la conduite sous l'effet de la pression externe, une gaine de pression interne, une voûte de pression constituée d'au moins un fil métallique de forme agrafé et enroulé hélicoïdalement à pas court, ladite voûte de pression servant à reprendre les efforts radiaux liés à la pression interne, au moins une nappe d'armures de traction formées d'enroulements hélicoïdaux à pas long et de fils métalliques composites, lesdites nappes d'armures étant destinées à reprendre les efforts longitudinaux que subit la conduite, et une gaine externe d'étanchéité destinée à protéger de l'eau de mer les couches de renfort.

Ce genre de conduite est dite à passage non lisse (« rough-bore » en anglais), c'est-à-dire que le fluide circulant dans la conduite est en contact avec la carcasse interne, ladite carcasse interne étant la première couche en partant de l'intérieur.

Alternativement, la conduite peut être à passage lisse (« smooth-bore » en anglais), c'est-à-dire que la conduite ne comporte pas de carcasse interne, la première couche en partant de l'intérieur étant dans ce cas une gaine d'étanchéité en matériau polymérique.

Les conduites tubulaires flexibles comportent, à chaque extrémité, un embout de connexion destiné à assurer le raccordement des conduites entres elles ou avec des équipements terminaux et ces embouts doivent être réalisés dans des conditions assurant à la fois une bonne solidarisation et une bonne étanchéité.

En effet, les embouts de connexion doivent assurer plusieurs fonctions qui sont notamment l'ancrage des armures de traction ainsi que le sertissage et l'étanchéité des extrémités libres des différentes gaines et particulièrement le sertissage au niveau de l'extrémité libre de la gaine de pression interne.

FR-2 561 745 décrit un embout de connexion d'une conduite tubulaire flexible.

Un autre embout de connexion d'une conduite tubulaire flexible pour le transport d'un fluide en milieu sous-marin est divulgué dans WO 2011/026801.

Un embout de conduite tubulaire flexible est décrit dans US 3 936 118. On connaît plusieurs types d'embouts de connexion utilisant le principe du sertissage de la gaine de pression interne, notamment par le document FR-2 816 389 au nom de la Demanderesse. Cet embout de connexion comporte une voûte d'extrémité reliée par des moyens de sertissage à la gaine de pression interne et un capot cylindrique prolongeant cette voûte et formant une étanchéité sur la gaine externe. La voûte et le capot déterminent une chambre annulaire dans laquelle s'étendent les extrémités libres des armures. Les fils constituant les armures sont déployés dans la chambre annulaire au-dessus des moyens de sertissage de la gaine de pression et cette chambre est remplie d'un matériau de remplissage formé d'une résine de type époxy assurant l'ancrage des armures de ladite au moins une nappe de traction.

Un crochet est formé à l'extrémité de chaque armure et ce crochet lorsqu'il est pris dans la résine, assure un blocage mécanique s'opposant aux efforts d'arrachement de la conduite. Ce moyen de blocage n'est cependant pas capable à lui seul de résister durablement aux sollicitations notamment parce que les caractéristiques mécaniques des armures sont plus basses au niveau de chaque crochet qu'en pleine longueur, ceci en raison du procédé de fabrication du crochet.
Afin de réduire le niveau de tension au niveau de chaque crochet, on utilise les frottements entre les armures et la résine, ainsi que l'effet cabestan. La trajectoire de chaque armure entre d'une part son point d'entrée dans la résine au niveau de l'arrière de l'embout et d'autre part le crochet n'est pas une droite. On obtient ainsi une retenue additionnelle par l'effet cabestan. Afin d'augmenter cet effet cabestan tout en limitant la taille de l'embout, on déforme volontairement les armures au niveau de l'embout en leur donnant à l'intérieur de la chambre annulaire, une trajectoire différente de celle qu'elles ont dans la conduite.

En pratique, chaque armure est d'abord écartée radialement de l'axe longitudinal de l'embout en remontant en hélice sur quelques dizaines de centimètres, le long d'un premier cône dit cône arrière, puis rapprochée de nouveau de l'axe longitudinal en redescendant en hélice le long d'un deuxième cône dit cône avant jusqu'à se terminer par le crochet. Cette trajectoire particulière en hélice de rayon croissant suivie d'une hélice de rayon décroissant augmente significativement l'effet cabestan et permet, de ce fait, d'améliorer les performances de l'ancrage en réduisant notamment le niveau de tension que doit reprendre chaque crochet.

Mais, au niveau de l'embout de connexion, la tension moyenne peut atteindre plusieurs centaines de tonnes et cette tension n'est pas constante, mais varie en permanence en fonction des mouvements verticaux du support flottant de production sous l'effet de la houle. Les variations associées de tension peuvent atteindre plusieurs dizaines de tonnes, et se répéter un très grand nombre de fois pendant la durée de vie de l'installation.

De ce fait, un problème de fatigue peut se poser à deux endroits dans l'embout, à savoir :
- au niveau des moyens d'ancrage situés à l'extrémité avant des armures,
- à l'arrière de l'embout, au niveau de la transition entre la conduite flexible et la zone d'encastrement des armures.

La fabrication des embouts utilisés jusqu'à présent nécessite de plier puis de déplier chaque armure, ce qui a pour effet d'écrouir fortement les fils des armatures au niveau de la partie arrière de l'embout. Cet écrouissage réduit localement la résistance à la fatigue des fils des armures.

En effet, la position des moyens de sertissage et/ou d'étanchéité de la gaine de pression interne au-dessous des parties d'extrémité des armures, oblige à plier fortement ces armures pendant le montage de l'embout afin de pouvoir effectuer le sertissage de cette gaine de pression pour accéder à ces moyens. Ainsi la zone la plus critique où les fils des armures peuvent se rompre en fatigue est plus précisément le point de décollement des armures pour passer d'une « hélice sur cylindre » à « hélice sur cône ». Sous l'effet des variations de tension, les fils peuvent en effet se déplacer de plusieurs millimètres le long de leur axe et ces déplacements relatifs entre les fils des armures et la résine ne sont pas préjudiciables dès que le rayon de courbure des fils reste constant et très grand ce qui est le cas tant que les fils des armures conservent la trajectoire hélicoïdale qu'ils ont dans la conduite.

Par contre, au niveau de la zone de décollement des fils des armures, le rayon de courbure chute brutalement. Ainsi, les zones des fils des armures situées au niveau de cette transition peuvent sous l'effet du déplacement axial passer d'une zone à grand rayon de courbure à une zone à faible rayon de courbure et vice versa ce qui génère des sollicitations en flexion et un phénomène de fatigue en flexion.

Pour tenter de remédier à ce problème, il est connu de placer sur la nappe d'armures, une bague empêchant un opérateur de plier les armures avec un rayon de courbure trop faible. Mais, même en présence de ce type de bague, la localisation des moyens de sertissage et/ou d'étanchéité de la gaine de pression interne au-dessous des parties d'extrémité des armures oblige à plier et à déplier successivement les armures pour effectuer le sertissage.

L'invention a donc pour but de proposer un embout de connexion qui évite ces inconvénients et qui permet non seulement de supporter une tension moyenne très élevée, mais aussi de résister en fatigue à de nombreux cycles de variation de tension oscillant autour de la tension moyenne.

L'invention a donc pour objet un embout de connexion d'une conduite tubulaire flexible pour le transport d'un fluide en milieu marin, ladite conduite étant du type non-lié et comprenant notamment au moins une gaine de pression interne et au moins une nappe d'armures de traction enroulées à pas long autour la gaine de pression et comportant chacune un bord avant ménagé sur une partie écartée des armures à partir d'un point de décollement de ladite gaine de pression, ledit embout comprenant une voûte d'extrémité et un capot cylindrique prolongeant cette voûte et formant une étanchéité sur la gaine externe ladite voûte et ledit capot formant une chambre annulaire remplie d'un matériau de remplissage et dans laquelle s'étendent les parties écartées des armures, caractérisé en ce que l'embout comporte également des moyens d'étanchéité et de sertissage de la gaine de pression disposés entre les bords avant des parties écartées des armures et la voûte d'extrémité après le montage de cet embout sur la conduite.

L'embout de connexion selon l'invention peut comprendre une ou plusieurs des caractéristiques suivantes, prises isolement ou suivant toute(s) les combinaison(s) techniquement possible(s) :
- les moyens d'étanchéité et de sertissage comprennent une bague annulaire comportant une partie avant effilée, ladite bague annulaire étant disposée autour de la gaine de pression dans un évidement cylindrique étagé, ménagé dans un alésage central de la voûte d'extrémité et comportant une portée avant conique,
- la bague annulaire est maintenue dans l'évidement par une bague d'arrêt fixée sur une paroi interne de la voûte d'extrémité,
- la partie écartée de chaque armure comporte des moyens d'ancrage dans le matériau de remplissage formés par une portion recourbée vers l'arrière à l'opposé de la voûte d'extrémité prolongée par une portion sensiblement hélicoïdale,
- la portion sensiblement hélicoïdale de chaque armure se termine par des moyens d'ancrage complémentaires formés par un crochet ou une vague ou une torsade,
- la partie écartée de chaque armure comporte des moyens d'ancrage dans le matériau de remplissage formés par une portion en hélice sur cône comportant un crochet ou une vague ou une torsade,
- chaque armure comporte devant le bord avant, une portion ayant une trajectoire de type hélice sur cône,
- le ou les points de décollement de chaque armure présente et un rayon de courbure supérieur à 50 mm avantageusement supérieur à 100 mm, plus avantageusement supérieur à 150 mm et
- le point de décollement de chaque armure est recouvert d'un matériau anticorrosion.
- les moyens d'ancrage complémentaires sont formés par un crochet recourbé vers l'avant.

L'invention a également pour objet un procédé de montage sur une extrémité d'une conduite flexible d'un embout de connexion tel que précédemment mentionné, caractérisé en ce qu'il consiste notamment en les étapes suivantes :
a) on monte le capot sur l'extrémité de la conduite en laissant découvertes les extrémités libres de ladite au moins une nappe d'armures et de la gaine de pression,
b) on écarte radicalement chaque armure,
c) on forme sur la partie écartée de chaque armure, les moyens d'ancrage dans le matériau de remplissage,
d) on engage sur l'extrémité libre de la gaine de pression, la bague annulaire d'étanchéité et de sertissage et la bague d'arrêt,
e) on monte sur l'extrémité libre de la conduite la voûte d'extrémité de l'embout,
f) on pousse axialement la bague annulaire vers l'avant dans l'évidement pour venir former un renflement annulaire vers l'intérieur s'incrustant dans la gaine de pression,
g) on fixe la bague d'arrêt sur la voûte d'extrémité pour bloquer la bague annulaire, ladite bague annulaire étant positionnée devant le bord avant de chaque armure,
h) on déplace le capot vers l'extrémité avant de la conduite et on fixe ce capot sur la voûte d'extrémité, et
i) on remplit la chambre annulaire formée par la voûte d'extrémité et le capot du matériau de remplissage pour ancrer les parties d'extrémité des armures de la nappe d'armures.

Selon une autre caractéristique de l'invention, après l'étape a), on engage sur l'extrémité découverte de ladite au moins nappe d'armures, une bague comportant un rebord interne présentant un rayon de courbure déterminé, ledit rebord étant positionné vers l'avant de la conduite, on soulève chaque armure en formant au moyen de ladite bague, un rayon de courbure selon le rayon de courbure du rebord interne de cette bague, on introduit au-dessous des parties soulevées des armures une bague de formage présentant un profil externe en forme de bicône, on applique chaque armure sur cette bague de formage pour réaliser une portion ayant une trajectoire du type hélice sur cône, on resoulève les armures pour retirer la bague de formage et on reprend les étapes de b) à i).

L'invention sera mieux comprise à la lecture de la description qui va suivre, donnée uniquement à titre d'exemple et faite en se référant aux dessins annexés, sur lesquels :
- la Fig. 1 est une vue en perspective et partielle d'une conduite tubulaire flexible utilisée pour l'exploitation off-shore de gisements pétroliers et gaziers,
- les Figs 2 à 10 sont des vues schématiques et partielles en coupe axiale de plusieurs modes de réalisation d'un embout de connexion d'une conduite tubulaire flexible, conforme à l'invention,
- la Fig. 11 est une demi-vue schématique en coupe axiale des moyens d'étanchéité et de sertissage de la gaine de pression interne,
- les Figs. 12 à 20 sont des demi-vues schématiques et partielles en coupe axiale montrant les différentes étapes de montage d'un embout de connexion, conforme à l'invention sur une conduite tubulaire flexible.

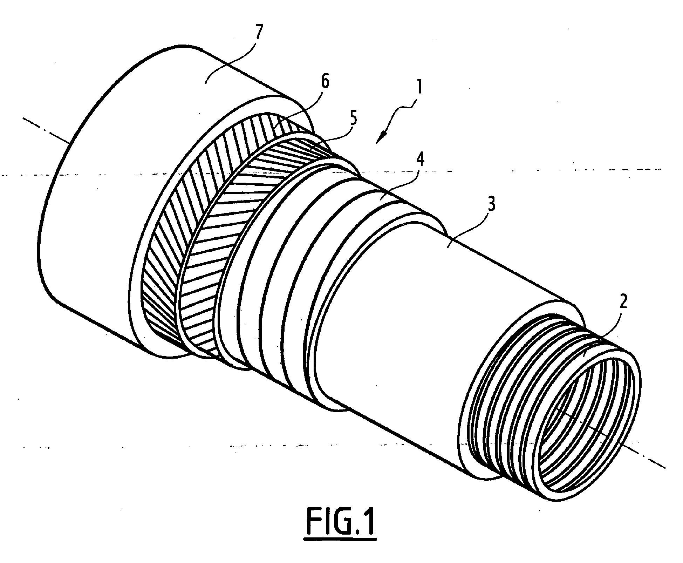

Sur la Fig. 1, on a représenté partiellement une conduite tubulaire flexible 1 destinée à l'exploitation pétrolière off-shore, et plus particulièrement au transport de produits pétroliers ou de gaz.

Elle est du type non-lié et répond aux spécifications définies dans les documents normatifs API 17J, API RP 17B.

Dans l'exemple de réalisation représenté sur cette figure, la conduite tubulaire flexible 1 comprend de l'intérieur à l'extérieur :
- une carcasse interne 2 constituée d'une bande métallique enroulée, profilée et agrafée selon une hélice à pas court, plus typiquement avec un angle d'hélice compris entre 70 et 90° et destinée à la résistance à l'écrasement sous l'effet de la pression externe appliquée à la conduite,
- une gaine de pression 3 interne réalisée par extrusion d'un matériau polymère,
- une voûte de pression 4 constituée d'au moins un fil métallique par exemple agrafé, enroulé hélicoïdalement à pas court, typiquement avec un angle d'hélice compris entre 70 et 90°, et assurant la résistance à la pression interne dans la conduite 1,
- au moins une nappe d'armures de traction et dans l'exemple de réalisation représenté à la Fig. 1, deux nappes croisées d'armures de traction 5 et 6 constituées par des fils métalliques formant des armures 8 enroulées en hélice à pas long typiquement selon des angles compris entre 20 et 55° et,
- une gaine d'étanchéité 7 en matériau polymère formant une protection externe de la conduite 1.

Cette conduite 1 est du type non-lié (« unbonded » en anglais), c'est-à-dire que les différentes couches composant cette conduite 1 présentent une certaine liberté de se déplacer les unes par rapport aux autres.

La conduite représentée à la Fig. 1 est du type « rough-bore », c'est-à-dire que le fluide circulant dans la conduite 1 est en contact avec la carcasse interne 2, ladite carcasse interne étant la première couche en partant de l'intérieur.

Alternativement, la conduite peut être du type « smooth-bore » c'est-à-dire que la conduite 1 ne comporte pas de carcasse interne 2, la première couche en partant de l'intérieur étant dans ce cas la gaine de pression 3 interne.

Selon un mode de réalisation non représenté, la conduite ne comporte pas de voûte de pression, et dans ce cas les armures 5 et 6 sont avantageusement enroulées avec un angle d'hélice de l'ordre de 55°, ce qui leur permet de reprendre à la fois la pression interne et les efforts de traction.

La conduite tubulaire flexible 1, comporte, à chacune de ses extrémités un embout de connexion 10 destiné à assurer le raccordement des conduites entre elles ou avec des équipements terminaux et ces embouts doivent être réalisés dans des conditions assurant à la fois une bonne solidarisation et une bonne étanchéité.

En effet, les embouts de connexion 10 peuvent assurer plusieurs fonctions qui sont notamment l'ancrage des armures de traction 5 et 6, ainsi que le sertissage et l'étanchéité des extrémités libres des différentes gaines d'étanchéité en matériau polymère 3 et 7 notamment.

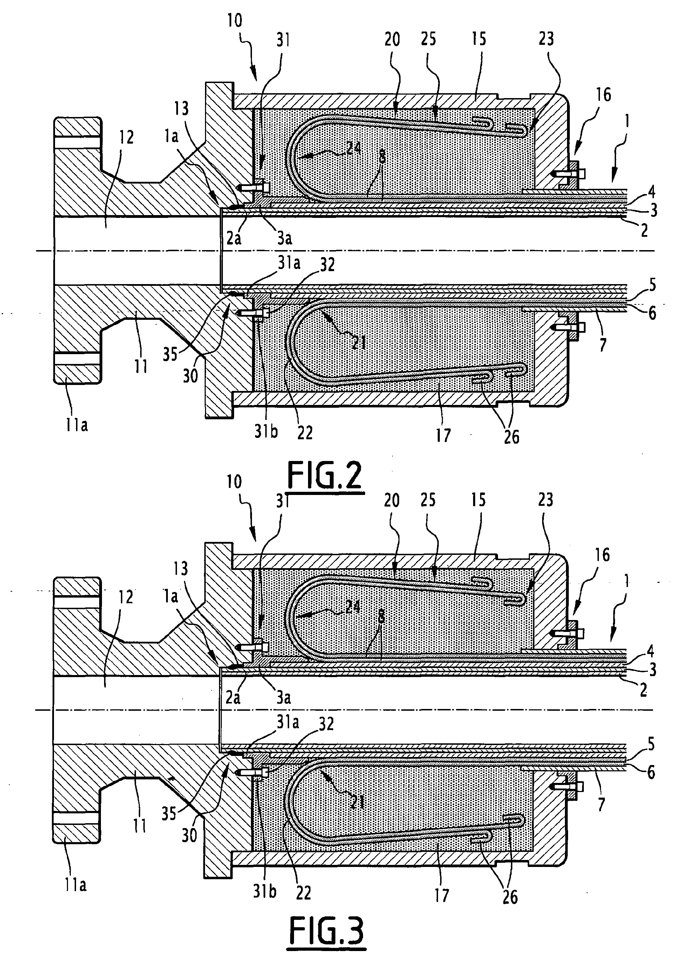

Sur les Figs. 2 à 10, les éléments communs sont désignés par les mêmes références et seuls les éléments de l'embout de connexion 10 permettant de faciliter la compréhension de l'invention ont été représentés, les autres éléments ayant été supprimés.

Dans la description qui suit, le terme « avant » signifie au plus près de l'extrémité libre 1a de la conduite 1 et le terme « arrière signifie plus éloigné de cette extrémité libre 1a.

D'une manière générale, l'embout 10 comprend une voûte d'extrémité 11 comportant une bride d'extrémité 11a destinée à la fixation sur un autre embout de connexion ou à des équipements terminaux. Cette voûte d'extrémité 11 présente un alésage 12 central cylindrique de diamètre interne sensiblement égal au diamètre interne de la carcasse interne 2, et dont la fonction est d'assurer l'écoulement des fluides transportés par la conduite 1.

Cet alésage central 12 est disposé à côté de l'extrémité libre 2a de la carcasse interne 2, coaxialement à cette dernière, de façon à assurer un écoulement continu des fluides entre la conduite 1 et l'embout 10.

La voûte d'extrémité 11 comporte, du côté de l'extrémité libre 1 a de la conduite 1 un évidement circulaire 13 étagé coaxial à l'alésage central 12 et présentant des diamètres supérieurs à cet alésage central 12 pour l'introduction de l'extrémité libre 2a de la carcasse 2 et également de l'extrémité libre 3a de la gaine de pression 3 interne.

L'embout de connexion 10 comporte également un capot cylindrique 15 prolongeant la voûte d'extrémité 11 et formant par des moyens de type connu une étanchéité 16 sur la gaine externe 7.

La voûte 11 et le capot 15 déterminent une chambre annulaire 17 dans laquelle s'étendent des parties écartées 20 des armures 8 des nappes d'armures 5 et 6. Les armures 8 de chaque nappe d'armures 5 et 6 sont écartées à partir d'un point de décollement 21. La chambre annulaire 17 est remplie d'un matériau de remplissage formé d'une résine du type époxy assurant l'ancrage des armures 8. Dans l'ensemble des modes de réalisation représentés sur les Figs. 2 à 10, les parties écartées 20 des armures 8 comportent chacune un bord avant 22 situé le plus près de la voûte d'extrémité 11 lorsque l'embout 10 est monté sur la conduite 1.

L'embout 10 comporte également des moyens 30 d'étanchéité et de sertissage de la gaine de pression 3. D'une manière générale, ces moyens 30 d'étanchéité et de sertissage sont disposés entre les bords avant 22 des armures 8 et la voûte d'extrémité 11, après le montage de cet embout 10 sur la conduite 1.

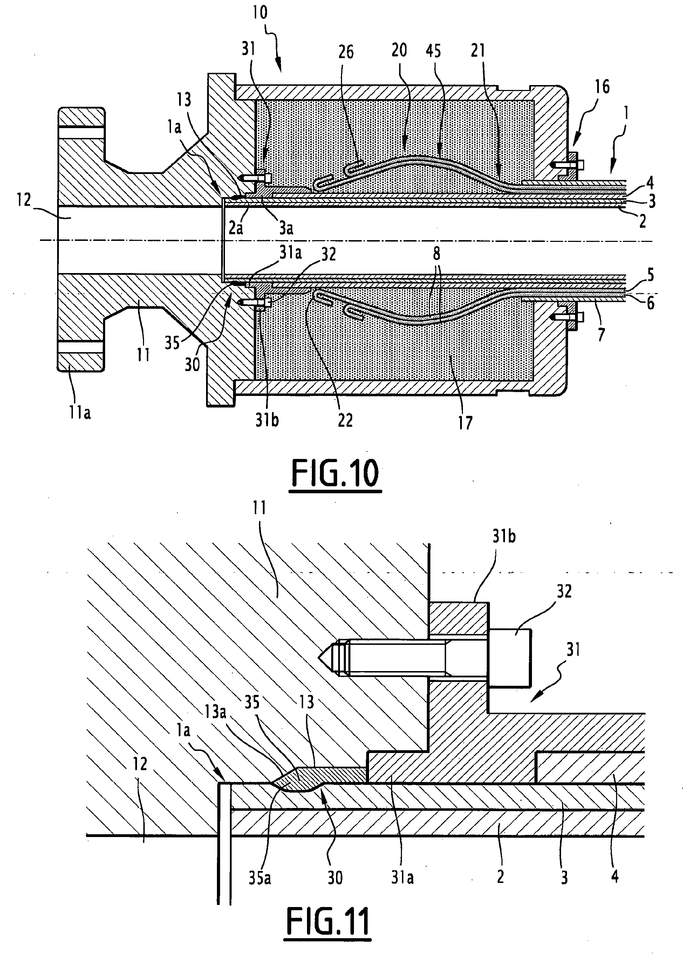

Ainsi que montré plus en détails sur la Fig. 11, les moyens 30 d'étanchéité et de sertissage comprennent une bague annulaire 35 comportant une partie avant effilée. Cette partie avant est susceptible de glisser sur une portée conique 13a ménagée dans l'évidement 13, lorsqu'elle subit une poussée axiale, pour venir former un renflement annulaire 35a vers l'intérieur qui vient mordre dans la gaine de pression 3 serrée entre la voûte d'extrémité 11 et la carcasse interne 2.

La bague annulaire 35 est maintenue dans l'évidement 13 par une bague d'arrêt 31 qui comporte une première partie cylindrique 31 a de recouvrement de l'extrémité libre 3a de la gaine de pression 3 et en butée contre cette bague annulaire 35, et une seconde partie 31b de fixation sur une paroi interne de la voûte d'extrémité 11 au moyen d'organes appropriés, comme par exemple des organes de vissage 32.

Alternativement, selon un mode de réalisation non représenté, les moyens 30 d'étanchéité et de sertissage comprennent un joint torique ou un joint spécial du type de ceux divulgués dans le document WO2004/001269.

Selon les modes de réalisation représentés sur les Figs. 2 à 6, la partie écartée 20 de chaque armure 8 comporte des moyens d'ancrage dans le matériau de remplissage à l'intérieur de la chambre annulaire 17, formés par une portion recourbée 24 vers l'arrière à l'opposé de la voûte d'extrémité 11, prolongée par une portion sensiblement hélicoïdale 25.

Selon le mode de réalisation représenté à la Fig. 2, la partie sensiblement hélicoïdale 25 de chaque armure 8 se termine par des moyens d'ancrage complémentaire formés par un crochet 26, l'ensemble des crochets 26 étant dirigé vers l'extérieur.

Selon le mode de réalisation représenté à la Fig. 3, la partie sensiblement hélicoïdale 25 de chaque armure 8 se termine par des moyens d'ancrage complémentaire formés par une alternance de crochets 26 dirigés vers l'extérieur et vers l'intérieur.

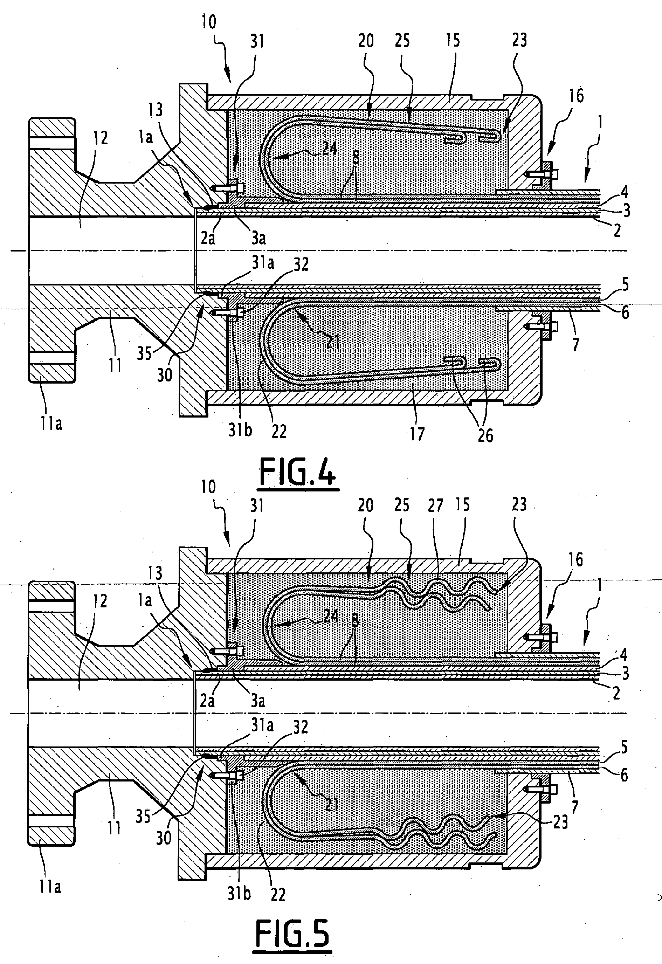

Selon le mode de réalisation représenté à la Fig. 4, la partie sensiblement hélicoïdale 25 de chaque armure 8 se termine par des moyens d'ancrage complémentaire formés par un crochet 26, l'ensemble des crochets 26 étant dirigé vers l'intérieur.

Selon le mode de réalisation représenté à la Fig. 5, la partie sensiblement hélicoïdale 25 de chaque armure 8 se termine par des moyens d'ancrage complémentaire formés par une vague 27.

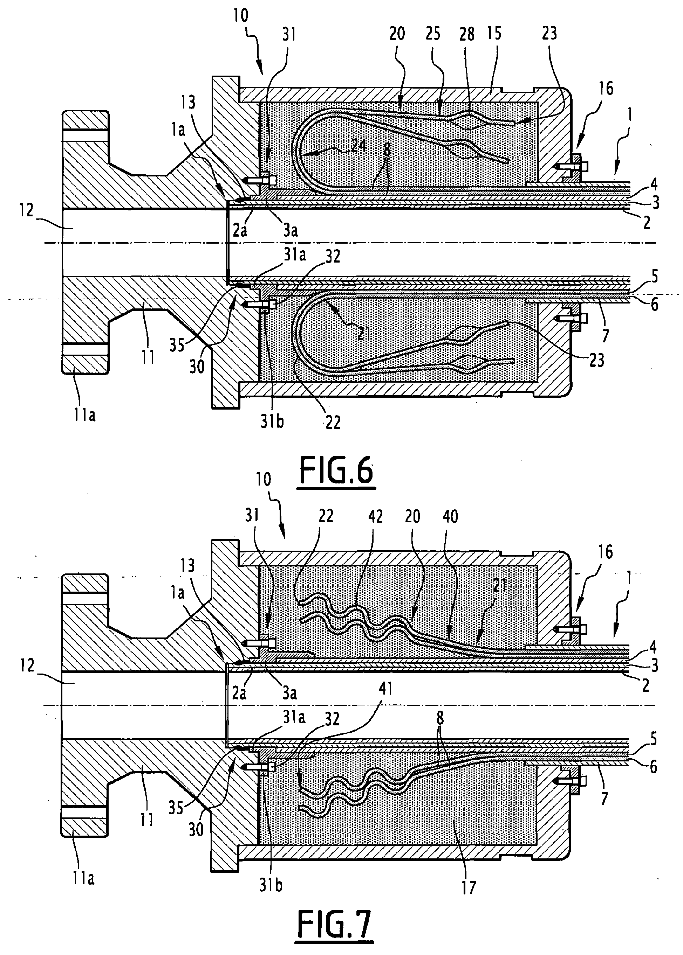

Selon le mode de réalisation représenté à la Fig. 6, la partie sensiblement hélicoïdale 25 de chaque armure 8 se termine par des moyens d'ancrage complémentaire formés par une torsade 28.

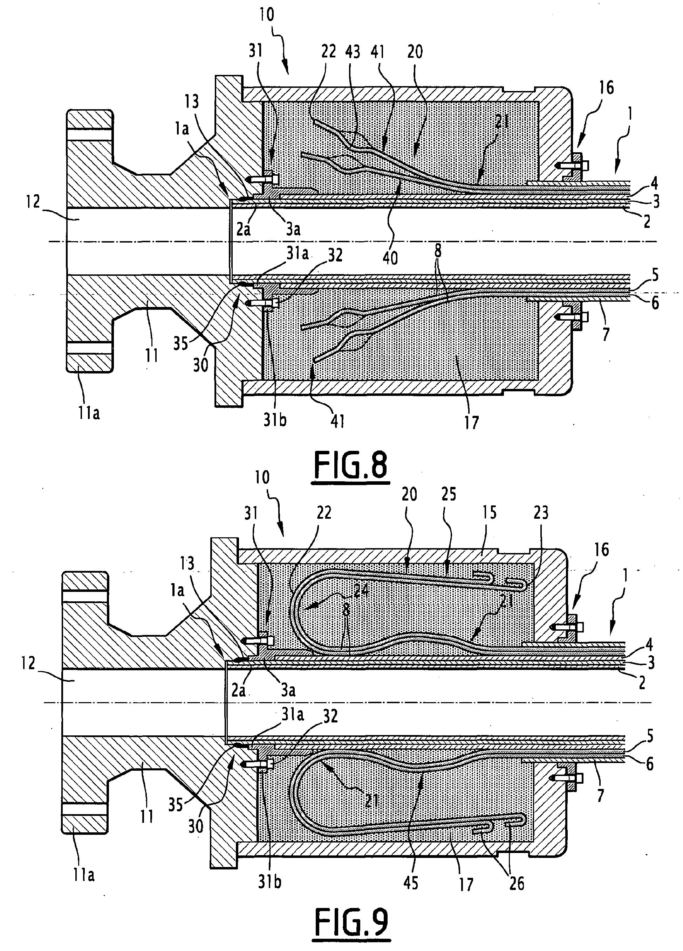

Ainsi que montré sur les Figs. 7 et 8, la partie écartée de chaque armure 8 comporte des moyens d'ancrage dans le matériau de remplissage à l'intérieur de la chambre annulaire 17 formée par une portion en hélice sur cône 40 et l'extrémité libre 41 de chaque armure 8 forme le bord avant 22 de chaque armure. Dans ces deux modes de réalisation aussi, les moyens de sertissage 30 de la gaine de pression 3 sont disposés entre les bords avant 22 des parties écartées 20 des armures 8 et la voûte d'extrémité 11 après le montage de l'embout 10 sur la conduite 1.

Selon le mode de réalisation représenté à la Fig. 7, la portion en hélice sur cône 40 de chaque armure 8 comporte des moyens d'ancrage complémentaire formés par une vague 42 ou selon le mode de réalisation représenté à la Fig. 8 une torsade 43.

Selon un autre mode de réalisation, non représenté, les moyens d'ancrage complémentaire peuvent également être formés par des crochets ménagés au niveau de l'extrémité libre de chaque armure 8.

Selon les modes de réalisation représentés sur les Figs. 9 et 10, chaque armure 8 comporte, à l'intérieur de la chambre annulaire 17 et entre son point d'entrée dans ladite chambre et son bord avant 22, une portion 45 non hélicoïdale, ayant une trajectoire de type hélice sur cône. Ainsi, chaque armure 8 s'écarte radialement de l'axe longitudinal en remontant en hélice sur quelques dizaines de centimètres, le long d'un premier cône dit cône arrière, puis se rapproche de nouveau de l'axe longitudinal en redescendant en hélice le long d'un deuxième cône dit cône avant.

Cette trajectoire particulière en hélice de rayon croissant suivie d'une hélice de rayon décroissant augmente significativement l'effet cabestan et permet d'améliorer les performances de l'ancrage des armures 8.

De plus, les crochets ou les torsades ou les vagues assurent un blocage mécanique s'opposant aux efforts d'arrachement de la conduite.

Le ou les points de décollement de chaque armure 8 présente un rayon de courbure supérieur à 50 mm, avantageusement supérieur à 100 mm, plus avantageusement supérieur à 150 mm. Ce ou ces points de décollement peuvent être recouverts d'un matériau anticorrosion.

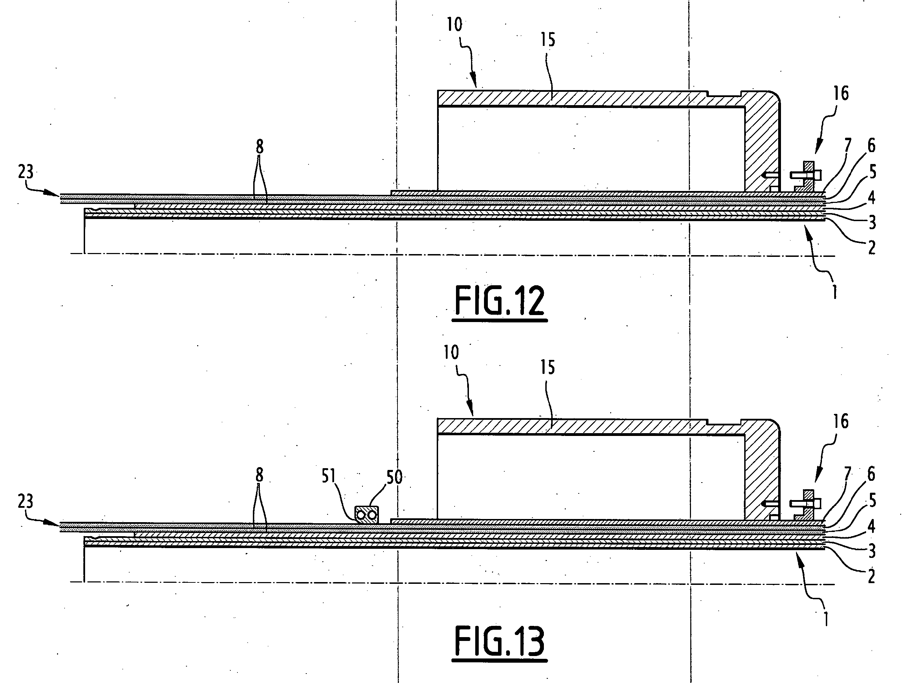

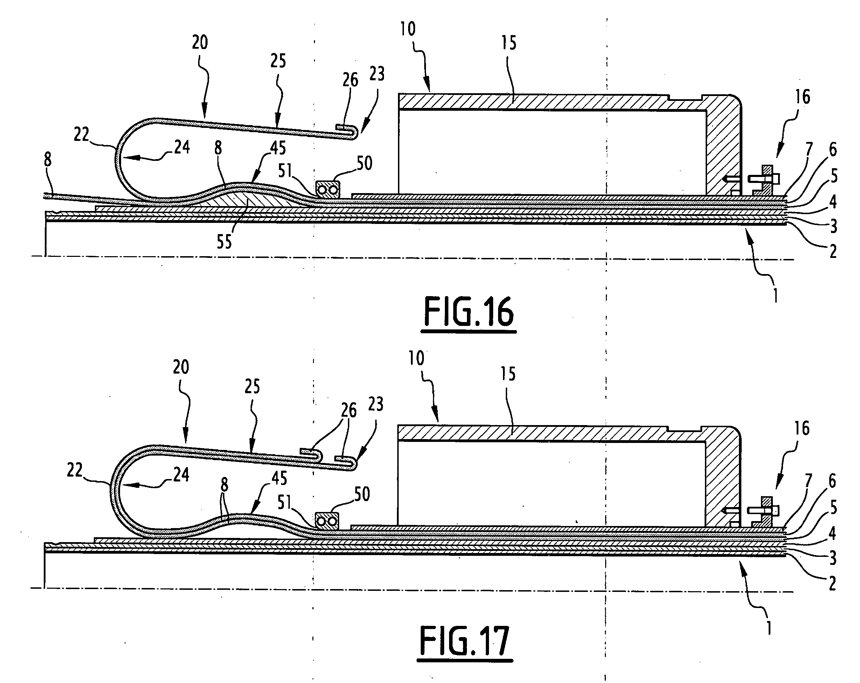

En se reportant maintenant aux Figs. 12 à 20, on va décrire les différentes étapes de montage sur une extrémité de la conduite tubulaire 1 flexible d'un embout de connexion 10, plus particulièrement dans le cadre du mode de réalisation représenté à la Fig. 9.

Après avoir coupé les différentes couches de la conduite flexible 1 à la longueur désirée, on monte sur cette conduite flexible, les moyens 16 d'étanchéité ainsi que le capot 15 de l'embout de connexion 10 en laissant découvertes, notamment les extrémités libres des nappes d'armures 5 et 6, de la gaine de pression 3 et également dans l'exemple de réalisation représenté sur ces figures de la voûte de pression 4 et de la carcasse 2.

Ensuite, on engage sur les extrémités découvertes des nappes d'armures 5 et 6, une bague de formage 50 comportant un rebord interne 51 présentant un rayon de courbure déterminé. Ce rebord 51 est positionné vers l'avant de la conduite 1. On positionne et on bloque cette bague de formage à une distance déterminée des extrémités libres 23 des armures 8.

On réalise les moyens d'ancrage, tels que ceux représentés sur les Figs. 2 à 8 en écartant radialement chaque armure 8 et en formant au moyen de la bague 50, un rayon de courbure selon le rayon de courbure du rebord interne 51 de cette bague 50. Ce rayon de courbure est supérieur à 50 mm avantageusement supérieur à 100 mm, plus avantageusement supérieur à 150 mm.

Dans le cas des modes de réalisation représentés sur les Figs. 2 à 6, on recourbe les parties 20 de chaque armure 8 vers l'arrière en réalisant la portion courbe 24 prolongée par la portion sensiblement hélicoïdale 25 et on forme les moyens d'ancrage complémentaires constitués par les crochets 26 ou les vagues 27 ou les torsades 28.

Dans le cas des modes de réalisation représentés sur les Figs. 7 et 8, après avoir écarté les armures 8 afin de réaliser les portions en hélice sur cône 40, on forme sur cette portion 40, les vagues 42 ou les torsades 43.

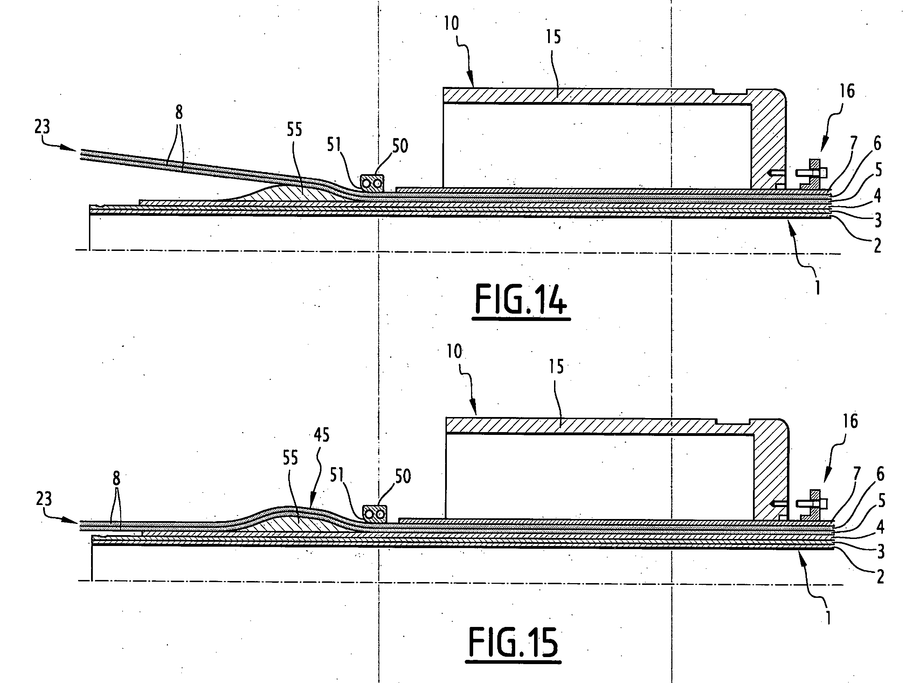

Dans le cas où les armures 8 comportent une portion 45 ayant une trajectoire du type hélice sur cône, on écarte radialement chaque armure et on introduit au-dessous des parties écartées de ces armures une bague de formage 55, ainsi que montré à la Fig. 14 présentant un profil externe en forme de bicône, la bague 50 évite que le point de décollement de chaque armure 8 présente un rayon de courbure trop faible.

Ensuite, on applique chaque armure 8 sur cette bague de formage 55 pour réaliser la portion 45 présentant une trajectoire du type hélice sur cône, ainsi que montrée à la Fig. 15.

Dans ce cas, après avoir formé la portion 45, on forme sur les armures 8 en aval de la portion 45, les différents moyens d'ancrage, comme décrit précédemment.

Pour retirer la bague de formage 55, on soulève les extrémités des armures 8 et on laisse ces extrémités revenir dans leur position initiale.

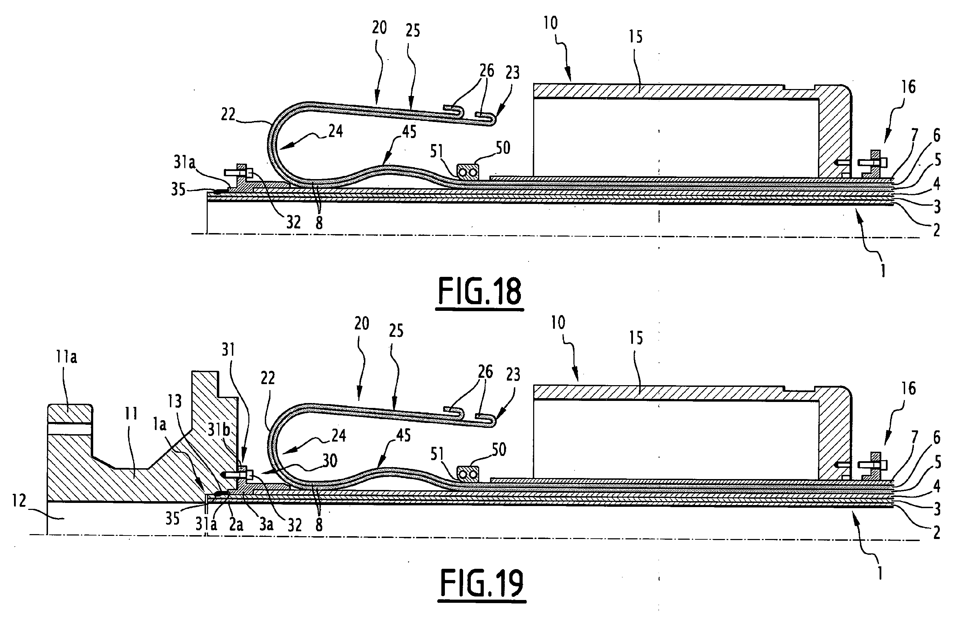

On monte sur l'extrémité libre 3a de la gaine de pression 3, la bague d'arrêt 31, puis la bague annulaire 35 d'étanchéité et de sertissage (Fig. 18) et on monte sur l'extrémité libre 1 a de la conduite 1, la voûte d'extrémité 11 de l'embout 10.

On pousse la bague annulaire 35 dans l'évidement 13 jusqu'au moment où la partie avant 35a effilée entre en contact avec la portée conique 13a afin de former le renflement annulaire 35a assurant l'étanchéité et le sertissage de la gaine de pression 3 (Fig. 11). Ensuite, on fixe la bague d'arrêt 31 sur la voûte d'extrémité 11 (Fig. 19).

On déplace le capot 15 vers l'extrémité avant de la conduite 1 et on fixe ce capot 15 sur la voûte d'extrémité 11, puis on fixe les moyens d'étanchéité 16 sur le capot 15.

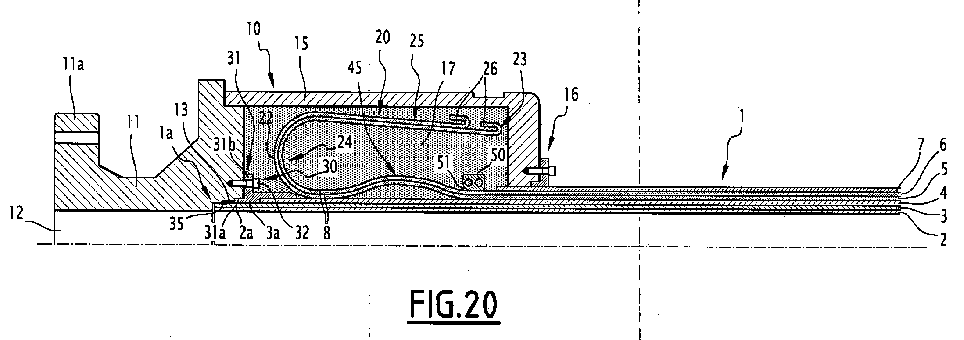

Ainsi que montré à la Fig. 20, la bague annulaire 30 de sertissage est positionnée entre le bord avant 24 de chaque armure 8 et la voûte de l'extrémité 11 en dehors des armures 8.

Le matériau de remplissage constitué par une résine de type époxy assure l'ancrage des parties d'extrémité des armures 8 des nappes d'armures 5 et 6.

Cet ancrage est favorisé par la présence des portions courbes et/ou des portions rectilignes, des crochets, des vagues ou des torsades et également par la présence de la portion présentant une trajectoire du type hélice sur cône.

La présence des moyens de sertissage de la gaine de pression interne en dehors des armures et non au-dessous de ces armures, comme dans l'état de la technique, évite de plier et de déplier successivement chaque armure et ainsi d'écrouir fortement le profil de l'armure au niveau de la partie arrière de l'embout. De ce fait, la résistance à la fatigue des armures est augmentée.

Le sertissage de la gaine de pression est donc réalisé sans avoir soit à plier et déplier les armures, soit à replier ces armures après pliage.

On notera que dans les modes de réalisation des Figures 2, 3, 4 et 9, les crochets 26 sont recourbés vers l'avant, c'est-à-dire vers l'extrémité libre de la conduite 1.

Au contraire, dans le mode réalisation de la Figure 10, les crochets 26 sont recourbés vers l'arrière, c'est-à-dire plus éloignés de l'extrémité libre.

## Revendications

1. Assemblage d'un embout de connexion (10) et d'une conduite tubulaire flexible (1) pour le transport d'un fluide en milieu marin, ladite conduite (1) étant du type non-lié et comprenant notamment une gaine de pression (3) interne et au moins une nappe d'armures de traction (5, 6) enroulées à pas long autour de la gaine de pression (3) et comportant chacune un bord avant (22) sur une partie écartée (20) à partir d'un point de décollement (21) de chaque armure (8) de ladite gaine de pression (3), ledit embout (10) comprenant une voûte d'extrémité (11) et un capot cylindrique (15) prolongeant cette voûte (11) et formant une étanchéité (16) sur la gaine externe (7), ladite voûte (11) et ledit capot (15) formant une chambre annulaire (17) remplie d'un matériau de remplissage et dans laquelle s'étendent les parties écartées (20) des armures (8), l'embout (10) comportant également des moyens (30) d'étanchéité et de sertissage de la gaine de pression (3) disposés entre les bords avant (24) des parties écartées (20) des armures (8) et la voûte d'extrémité (11),
les moyens (30) d'étanchéité et de sertissage comprenant une bague annulaire (35) comportant une partie avant effilée, ladite bague annulaire (35) étant disposée autour de la gaine de pression (3) dans un évidement cylindrique (13) étagé ménagé dans un alésage central (12) de la voûte d'extrémité (11) et comportant une portée avant (13a) conique, **caractérisé en ce que** la bague annulaire (35) forme un renflement annulaire vers l'intérieur s'incrustant dans la gaine de pression (3).

2. Assemblage (10) selon la revendication 1, **caractérisé, en ce que** la bague annulaire (35) est maintenue dans l'évidement (13) par une bague d'arrêt (31) fixée sur une paroi interne de la voûte d'extrémité (11).

3. Assemblage (10) selon la revendication 1 , **caractérisé en ce que** la partie écartée (20) de chaque armure (8) comporte des moyens d'ancrage dans le matériau de remplissage formés par une portion recourbée (24) vers l'arrière à l'opposé de la voûte d'extrémité (11), prolongée par une portion sensiblement hélicoïdale (25).

4. Assemblage (10) selon la revendication 3, **caractérisé en ce que** la partie sensiblement hélicoïdale (25) de chaque armure (8) se termine par des moyens d'ancrage complémentaire formés par un crochet (26) ou une vague (27) ou une torsade (28).

5. Assemblage (10) selon l'une quelconque des revendications 1 à 2, **caractérisé en ce que** la partie écartée (20) de chaque armure (8) comporte des moyens d'ancrage dans le matériau de remplissage formés par une portion (40) en hélice sur cône comportant un crochet (26) ou une torsade (43) ou une vague (42).

6. Assemblage (10) selon l'une quelconque des revendications 1 à 5, **caractérisé en ce que** chaque armure (8) comporte devant le bord avant (22), une portion (45) ayant une trajectoire du type hélice sur cône.

7. Assemblage (10) selon l'une quelconque des revendications 1 à 6, **caractérisé en ce que** le ou les points de décollement de chaque armure présente un rayon de courbure supérieur à 50 mm avantageusement supérieur à 100 mm, plus avantageusement supérieur à 150 mm.

8. Assemblage (10) selon l'une quelconque des revendications 1 à 6, **caractérisé en ce que** le point de décollement de chaque armure est recouvert d'un matériau anticorrosion.

9. Procédé de montage sur une extrémité d'une conduite tubulaire flexible (1) d'un embout de connexion (10) selon l'une quelconque des revendications 1 à 8, **caractérisé en ce qu'**il consiste notamment en les étapes suivantes :
a) on monte le capot (15) sur l'extrémité de la conduite (1), en laissant découvertes les extrémités libres de ladite au moins une nappe d'armures (5, 6) et de la gaine de pression (3),
b) on écarte radialement chaque armure (8),
c) on forme sur la partie écartée (20) de chaque armure (8), les moyens d'ancrage dans le matériau de remplissage,
d) on engage sur l'extrémité libre (3a) de la gaine de pression (3), la bague annulaire (35) d'étanchéité et de sertissage et une bague d'arrêt (31)
e) on monte sur l'extrémité libre de la conduite, la voûte d'extrémité (11) de l'embout (10),
f) on pousse axialement la bague annulaire (35) vers l'avant dans l'évidement, (13) pour venir former le renflement annulaire vers l'intérieur s'incrustant dans la gaine de pression (3),
g) on fixe la bague d'arrêt (31) sur la voûte d'extrémité (11) pour bloquer la bague annulaire (35), ladite bague annulaire (35) étant positionnée devant le bord avant (22) de chaque armure (8),
h) on déplace le capot (15) vers l'extrémité avant de la conduite (1) et on fixe ce capot (15) sur la voûte d'extrémité (11), et
i) on remplit la chambre annulaire (17) formée par la voûte d'extrémité (11) et le capot (15) du matériau de remplissage pour ancrer les parties d'extrémité des armures (8) de ladite au moins une nappe d'armures (5, 6).

10. Procédé de montage selon la revendication 9, **caractérisé en ce qu'**après l'étape a), on engage sur l'extrémité découverte de ladite au moins une nappe d'armures (5, 6), une bague (50) comportant un rebord interne (51) présentant un rayon de courbure déterminé, ledit rebord (51) étant positionné vers l'avant de la conduite (1), on soulève chaque armure (8) en formant au moyen de ladite bague (50), un rayon de courbure selon le rayon de courbure du rebord interne (51) de cette bague, on introduit au-dessous des parties soulevées des armures (8), une bague de formage (55) présentant un profil externe en forme de bicône, on applique chaque armure (8) sur cette bague de formage (55) pour réaliser une portion (45) ayant une trajectoire du type hélice sur cône, on resoulève les armures (8) pour retirer la bague de formage (55) et on reprend les étapes de b) à i).

## Patentansprüche

1. Einrichtung aus einem Verbindungsansatzstück (10) und einer flexiblen, rohrförmigen Leitung (1) für das Fördern eines Fluids im Meeresmilieu, wobei die Leitung (1) vom Ungebunden-Typ ist und insbesondere ein inneres Druckrohr (3) und wenigstens eine Schicht aus Zugbewehrungen (5,6) aufweist, welche mit einer langen Ganghöhe um das Druckrohr (3) gewickelt sind und von welchen eine jede eine vordere Seite (22) an einem von einem Punkt des Abgehens (21) einer jeden Armierung (8) von dem Druckrohr (3) wegführenden Teil (20) aufweist, wobei das Ansatzstück (10) ein Endgewölbe (11) und eine zylindrische Kappe (15) aufweist, welche das Gewölbe (11) fortsetzt und eine Abdichtung (16) an dem äußeren Rohr (7) bildet, wobei das Gewölbe (11) und die Kappe (15) eine ringförmige Kammer (17) bilden, welche mit einem Füllmaterial gefüllt ist und in welcher sich die wegführenden Teile (20) der Bewehrungen (8) erstrecken, wobei das Ansatzstück (10) auch Mittel (30) zur Abdichtung und zur Pressverbindung des Druckrohrs (3) aufweist, welche zwischen der vorderen Seite (22) der wegführenden Teile (20) der Bewehrungen (8) und dem Endgewölbe (11) angeordnet sind, wobei die Mittel (30) zur Abdichtung und zur Pressverbindung eine ringförmige Hülse (35) aufweisen, welche einen spitzen vorderen Teil aufweist, wobei die ringförmige Hülse (35) um das Druckrohr (3) herum in einer zylindrischen, abgestuften Aussparung (13) angeordnet ist, welche in einer zentralen Bohrung (12) des Endgewölbes (11) vorgesehen ist und einen vorderen konischen Bereich aufweist, **dadurch gekennzeichnet, dass** die ringförmige Hülse (35) eine ringförmige Ausbauchung nach innen hin bildet, welche sich in das Druckrohr (3) drückt.

2. Einrichtung (10) gemäß Anspruch 1, **dadurch gekennzeichnet, dass** die ringförmige Hülse (35) in der Aussparung (13) mittels eines Arretierrings (31) gehalten ist, welcher an einer inneren Wand des Endgewölbes (11) befestigt ist.

3. Einrichtung (10) gemäß Anspruch 1, **dadurch gekennzeichnet, dass** der wegführende Teil (20) jeder Bewehrung (8) Mittel zur Verankerung in dem Füllmaterial aufweist, welche aus einem entgegengesetzt zu dem Endgewölbe (11) nach hinten gebogenen Abschnitt (24) gebildet sind, welcher durch einen im Wesentlichen schraubenförmigen Abschnitt (25) fortgesetzt ist.

4. Einrichtung (10) gemäß Anspruch 3, **dadurch gekennzeichnet, dass** der im Wesentlichen schraubenförmigen Abschnitt (25) jeder Bewehrung (8) durch zusätzliche Mittel zur Verankerung endet, welche durch einen Haken (26) oder eine Welle (27) oder eine Verdrehung (28) ausgebildet sind.

5. Einrichtung (10) gemäß irgendeinem der Ansprüche 1 bis 2, **dadurch gekennzeichnet, dass** der wegführende Teil (20) jeder Bewehrung (8) Mittel zur Verankerung in dem Füllmaterial aufweist, welche aus einem Schraube-auf-Konus-Abschnitt (40) gebildet ist, welcher einen Haken (26) oder eine Verdrehung (43) oder eine Welle (42) aufweist.

6. Einrichtung (10) gemäß irgendeinem der Ansprüche 1 bis 5, **dadurch gekennzeichnet, dass** jede Bewehrung (8) vor dem vorderen Rand (22) einen Abschnitt (45) aufweist, welcher eine Bahn vom Schraube-auf-Konus-Typ aufweist.

7. Einrichtung (10) gemäß irgendeinem der Ansprüche 1 bis 6, **dadurch gekennzeichnet, dass** der oder die Punkte des Abgehens jeder Bewehrung einen Krümmungsradius größer als 50mm, vorteilhaft als größer 100mm, noch vorteilhafter größer als 150mm aufweisen.

8. Einrichtung (10) gemäß irgendeinem der Ansprüche 1 bis 6, **dadurch gekennzeichnet, dass** der Punkt des Abgehens jeder Bewehrung mit einem korrosionsverhütenden Material beschichtet ist.

9. Verfahren des Anbringens eines Verbindungsansatzstücks (10) gemäß irgendeinem der Ansprüche 1 bis 8 in einem Ende einer flexiblen, rohrförmigen Leitung (1), **dadurch gekennzeichnet, dass** es insbesondere aus den folgenden Schritten besteht:
a) man zieht die Kappe (15) auf das Ende der Leitung (1) auf, wobei man die freien Enden der wenigstens einen Schicht von Bewehrungen (5, 6) und des Druckrohrs (3) unbedeckt lässt,
b) man führt jede Bewehrung (8) radial weg,
c) man bildet in einem wegführenden Teil (20) jeder Bewehrung (8) die Mittel zur Verankerung in dem Füllmaterial,
d) man bringt auf dem freien Ende (3a) des Druckrohrs (3) die ringförmige Hülse (35) zur Abdichtung und zur Pressverbindung und einen Arretierring (31) in Eingriff,
e) man zieht auf das freie Ende der Leitung das Endgewölbe (11) des Ansatzstücks (10) auf,
f) man schiebt die ringförmige Hülse (35) axial nach vorne in die Aussparung (13), um die ringförmige Ausbauchung nach innen zu bilden, welche sich in das Druckrohr (3) drückt,
g) man befestigt den Arretierring (31) an dem Endgewölbe (11) zum Blockieren der ringförmigen Hülse (35), wobei die ringförmige Hülse (35) vor der vorderen Seite (22) jeder Bewehrung (8) angeordnet ist,
h) man verschiebt die Kappe (15) hin zu dem vorderen Ende der Leitung (1) und man befestigt die Kappe (15) an dem Endgewölbe (11), und
i) man füllt die ringförmige Kammer (17), welche durch das Endgewölbe (11) und die Kappe (15) gebildet wird, mit Füllmaterial, um die Endteile der Bewehrungen (8) der wenigstens einen Schicht von Bewehrungen (5,6) zu verankern.

10. Verfahren des Anbringens gemäß Anspruch 9, **dadurch gekennzeichnet, dass** man nach dem Schritt a) an dem unbedeckten Ende der wenigstens einen Schicht von Bewehrungen (5,6) einen Ring (50) in Eingriff bringt, welcher eine Innenkante (51) aufweist, welche einen vorbestimmten Krümmungsradius aufweist, wobei die Kante (51) in Richtung der Vorderseite der Leitung (1) positioniert wird, man hebt jede Bewehrung (8) an, wobei mittels des Rings (50) ein Krümmungsradius gemäß dem Krümmungsradius der Innenkante (51) dieses Rings ausgebildet wird, man führt unter die angehobenen Teile der Bewehrungen (8) einen Formring (55) ein, welcher ein Außenprofile in Form eines Doppelkonus aufweist, man bringt jede Bewehrung (8) an diesem Formring (55) an, um einen Abschnitt (45) zu realisieren, welcher eine Bahn vom Schraube-auf-Konus-Typ aufweist, man hebt die Bewehrungen (8) erneut an, um den Formring (55) zu entfernen, und man nimmt wieder die Schritte b) bis i) vor.

## Claims

1. Assembly of a connection end fitting (10) and of a flexible tubular pipe (1) for transporting a fluid in a marine environment, said pipe (1) being of the unbonded type and in particular comprising at least one inner pressure sheath (3) and at least one tensile pressure armor layer (5, 6) which are wound at a long pitch around the pressure sheath (3) and each include a forward edge (22) formed on a part (20) spaced away from a point of detachment (21) of said pressure sheath (3), said end fitting (10) comprising an end vault (11) and a cylindrical cap (15) extending said vault (11) and forming sealing (16) on the outer sheath (7), said vault (11) and said cap (15) forming an annular chamber (17) filled with a filler material and into which the separated parts (20) of the armors (8) extend, the end fitting (10) also including means (30) of sealing and crimping the pressure sheath (3) which are positioned between the forward edges (24) of the separated parts (20) of the armors (8) and the end vault (11), the sealing and crimping means (30) comprising an annular ring (35) including a slender forward part, said annular ring (35) being positioned around the pressure sheath (3) in a stepped cylindrical recess (13), formed in a central bore (12) of the end vault (11) and including a conical forward step (13a), **characterized in that** the annular ring (35) forms an annular bulge toward the inside embedded in the pressure sheath (3).

2. The assembly according to claim 1, **characterized in that** the annular ring (35) is kept in the recess (13) by a stop ring (31) fastened on an inner wall of the end vault (11).

3. The assembly according to claim 1, **characterized in that** the separated part (20) of each armor (8) includes means for anchoring in the filler material formed by a portion (24) curved toward the rear opposite the end vault (11) extended by a substantially helix portion (25).

4. The assembly according to claim 3, **characterized in that** the substantially helix portion (25) of each armor (8) ends with complementary anchoring means formed by a hook (26) or a wave (27) or a twist (28).

5. The assembly according to any one of claims 1 to 2, **characterized in that** the separated part (20) of each armor (8) includes means for anchoring in the filler material formed by a helix on cone portion (40) including a hook (26) or a twist (43) or a wave (42).

6. The assembly according to any one of claims 1 to 5, **characterized in that** each armor (8) includes, in front of the forward edge (22), a portion (45) having a helix on cone-type trajectory.

7. The assembly according to any one of claims 1 to 6, **characterized in that** the point(s) of detachment of each armor have a radius of curvature greater than 50 mm, advantageously greater than 100 mm, more advantageously greater than 150 mm.

8. The assembly according to any one of claims 1 to 6, **characterized in that** the point of detachment of each armor is covered with an anti-corrosion material.

9. A method for fitting an end fitting (10) according to any one of claims 1 to 8 on an end of a flexible pipe (1), **characterized in that** it in particular consists of the following steps:
a) the cap (15) is mounted on the end of the pipe (1) while leaving the free ends of said at least one armor layer (5, 6) and the pressure sheath (3) exposed,
b) each armor (8) is radially separated,
c) the anchoring means for anchoring in the filler material are formed on the separated part (20) of each armor (8),
d) the annular sealing and crimping ring (32) and the stop ring (31) are engaged on the free end (3a) of the pressure sheath (3),
e) the end vault (11) of the end fitting (10) is fitted on the free end of the pipe,
f) the annular ring is pushed axially forward in the recess (13) to form the annular bulge toward the inside embedded in the pressure sheath (3),
g) the stop ring (31) is fastened on the end vault (11) to block the annular ring (32), said annular ring (32) being positioned in front of the forward edge (22) of each armor (8),
h) the cap (15) is moved toward the front end of the pipe (1), and said cap (15) is fastened on the end vault (11), and
i) the annular chamber (17) formed by the end vault (11) and the cap (15) is filled with filler material to anchor the end parts of the armors (8) of the armor layer (5, 6).

10. The fitting method according to claim 9, **characterized in that** after step a), a ring is engaged on the exposed end of said at least one armor layer (5, 6), said ring (50) including an inner rim (51) having a predetermined radius of curvature, said rim (51) being positioned toward the front of the pipe (1); each armor (8) is lifted while forming, using said ring (50), a radius of curvature according to the radius of curvature of the inner rim (51) of said ring; a shaping ring (55) is inserted below the raised parts of the armors (8), said shaping ring having an outer profile in the form of a bi-cone; said shaping ring (55) is applied on each armor (8) to produce a portion (45) having a helix on cone-type trajectory; the armors (8) are raised again to remove the shaping ring (55); and steps b) to i) are repeated.
